# DEMANDE DE BREVET EUROPEEN

(11) **EP 1 011 271 A1**
(43) Date de publication de la demande: **21.06.2000**
(21) Numéro de dépôt: 99403019.5
(22) Date de dépôt: 03.12.1999
(51) Int. Cl.: H04N 7/50

(54) **Procédé et dispositif de compression d'images par transformée en ondelettes utilisant une technique de quantification par approximations successives**

(30) Priorité: 10.12.1998 FR 9815580
(71) Demandeur: ALCATEL, 75008 Paris (FR)
(72) Inventeur: Feautrier, François, 92160 Antony (FR); Gilbert, Frédéric, 78220 Viroflay (FR)
(74) Mandataire: Lamoureux, Bernard

(57) **Abrégé**

Procédé automatique de compression d'images numériques pour système embarqué, comportant les étapes ordonnées suivantes :
- transformée en ondelettes au fil de l'eau d'un ensemble de points de l'image numérique à traiter fournissant un ensemble de coefficients groupés par bandes,
- calcul d'un ensemble de symboles à partir de ces coefficients,
- ordonnancement de l'ensemble de symboles
- codage des symboles en fonction d'un contexte contenu dans les bandes.

## Description

La présente invention concerne un procédé de compression d'images dans un système embarqué. L'invention s'applique particulièrement bien aux satellites ainsi qu'aux terminaux mobiles de télécommunication permettant l'affichage d'images sur un écran.

Parmi les nombreuses techniques de compression d'images qui ont été étudiées, celles qui donnent les meilleures performances en terme de qualité de l'image reconstruite et de taux de compression, sont celles basées sur la transformée en ondelettes. Du fait de leurs performances supérieures, celles-ci supplantent peu à peu les techniques basées sur des transformées de Fourrier ou en cosinus comme, par exemple, les algorithmes de compression d'images issus des travaux du JPEG (pour *Joint Photographic Expert Group* en anglais).

L'utilisation de la transformée en ondelettes pour la compression de données, notamment de données images, est présentée dans de nombreux ouvrages dont *An Overview of Wavelet based Multiresolution Analyses*, de Bjôrn Jawerth et Wim Sweldens, paru dans SIAM Revue, vol. 36, n°3, 1994.

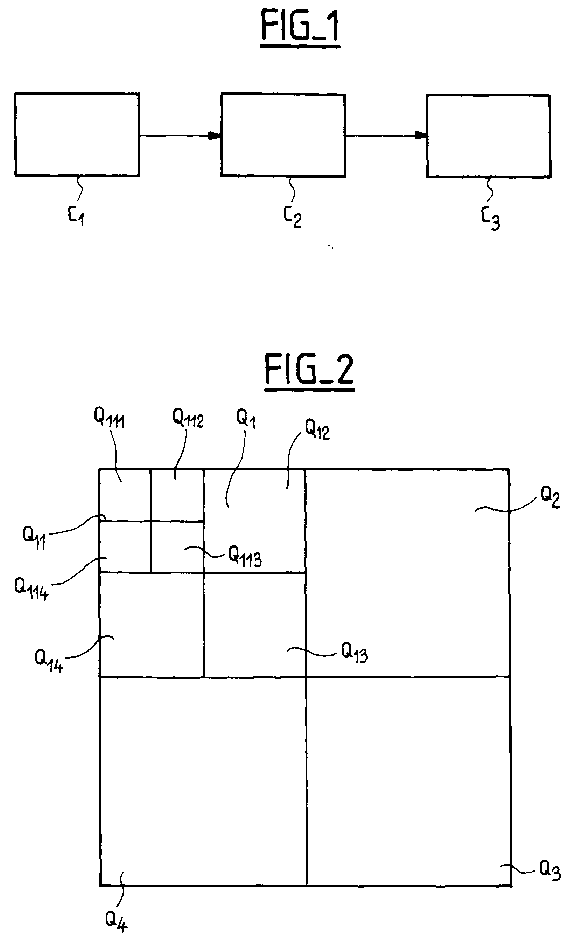

L'apport principal de la transformée en ondelettes consiste à réaliser une analyse multi-résolution de l'image. Ce principe est illustré par la figure 2.

Pour un premier niveau de résolution, cette image est divisée en 4 quadrants Q₁, Q₂, Q₃ et Q₄. Le premier quadrant, appelé image des tendances, représente schématiquement la même image que l'image globale mais à une résolution deux fois moindre. Les quadrants Q₂, Q₃ et Q₄, appelé images des variations, représentent les écarts qui existent entre l'image des tendances et l'image originale, respectivement selon la direction horizontale, la direction verticale et la diagonale. Cette transformation est non destructrice car à partir des informations contenues dans l'image des tendances et dans les images des variations, on peut reconstruire l'image d'origine.

Pour un second niveau de résolution, le même processus est itéré à partir du quadrant Q₁ pour former une nouvelle image des tendances Q₁₁ et trois nouvelles images des variations Q₁₂, Q₁₃ et Q₁₄.

Le but de l'utilisation de la transformée en ondelettes pour la compression d'images est similaire à celle de la transformée de Fourrier : il s'agit de décorréler au maximum les données à compresser afin d'améliorer les performances des étapes ultérieures qui, elles, viseront à réduire la taille des données.

Le schéma général de la compression d'images par utilisation de la transformée en ondelettes est donné par la figure 1. Il peut se décomposer en trois étapes :
- une étape référencée C₁ de transformation en ondelettes,
- une étape référencée C₂ de quantification des coefficients issus de la transformée en ondelettes,
- une étape référencée C₃ de codage des données résultant de la quantification.

Néanmoins, ce principe général présente un inconvénient majeur notamment dans le cas de systèmes embarqués, par exemple dans un satellite ou dans un terminal mobile de télécommunication. Dans un tel système, en effet, la taille de la mémoire devient une donnée critique pour des raisons de poids de celle-ci. Il est donc important de minimiser la taille de la mémoire nécessaire aux différents algorithmes implantés dans le système.

Or la transformée en ondelettes nécessite une grande quantité de ressources mémoires. En effet, il s'agit d'une transformation globale sur l'image, et elle nécessite, dans sa mise en oeuvre la plus naturelle, que la totalité de l'image soit présente en mémoire pour effectuer le calcul.

Typiquement donc, les ressources mémoires nécessaires pour les algorithmes de calcul d'une transformée en ondelettes sont de l'ordre de la taille de l'image. Dans le cas d'un système embarqué sur un satellite d'observation par exemple, cette taille est typiquement de 12000 pixels par lignes, généralement codés en 8 bits, ou 24 bits pour des images en couleurs.

Pour résoudre ce problème crucial, une solution a été proposée par Christos Chrysafis et Antonio Ortega dans l'article « *Line Based, Reduced Memory, Wavelet Image Compression* », *in Data Compression Conference*, tenue du 30 mars au 1^{er} avril 1998 à Snowburn en Utah (U.S.A.)

Le résultat de la transformée en ondelettes, dite au fil de l'eau, effectuée selon cet état de la technique est approximativement le même que celui donné par le procédé classique. Seul diffère le procédé de calcul de ce résultat qui est spécialement étudié pour minimiser l'espace mémoire nécessaire.

Le principe de ce procédé est de traiter l'image ligne par ligne au lieu d'effectuer la transformée en ondelettes sur toutes les lignes puis sur toutes les colonnes.

Néanmoins l'inconvénient du procédé décrit est que, ainsi que l'indique l'article, une simple quantification uniforme est ensuite appliquée aux données résultant de la transformée en ondelettes.

Par conséquent, la minimisation de la taille de la mémoire nécessaire pour la compression des images se fait au détriment des performances en compression, c'est-à-dire du taux de compression et/ou de la qualité de l'image reconstruite.

Le but de la présente invention est de pallier les désavantages de l'algorithme proposé par Christos Chrysafis et Antonio Ortega dans leur article précédemment cité, notamment en offrant un procédé de compression d'image basé sur une transformée en ondelettes qui minimise les ressources mémoires nécessaires, et obtient de bonnes performances en ce qui concerne le taux de compression et la qualité de l'image reconstruite.

Pour cela, l'invention a pour un objet un procédé automatique de compression d'images numériques pour système embarqué, comportant les étapes ordonnées suivantes :
- transformée en ondelettes au fil de l'eau d'un ensemble de points de l'image numérique à traiter fournissant un ensemble de coefficients groupés par bandes,
- calcul d'un ensemble de symboles à partir de ces coefficients,
- ordonnancement de cet ensemble de symboles,
- codage des symboles en fonction d'un contexte contenu dans les bandes.

Selon une mise en oeuvre particulière, l'étape de codage est précédée d'une étape de distinction entre les zéros isolés et les zéros de type *zerotree*.

L'invention a aussi pour objet un dispositif pour la compression d'images numériques dans un système embarqué, comportant :
- un moyen pour effectuer une transformée en ondelettes au fil de l'eau d'un ensemble de points de l'image numérique à traiter fournissant un ensemble de coefficients groupés par bandes,
- un moyen de calcul d'un ensemble de symboles à partir de ces coefficients,
- un moyen d'ordonnancement de l'ensemble de symboles,
- un moyen de codage des symboles en fonction d'un contexte contenu dans les bandes.

Un avantage du procédé selon l'invention est que l'ensemble des données résultantes pour un taux de compression donné contient l'ensemble des données pour les taux de compression supérieurs. Cette propriété est intéressante dans la mesure où elle permet de choisir le plus tard possible le taux de compression désiré, sans procéder à des traitements spécifiques pour changer ce taux de compression. Cette propriété est absente des procédés connus de compression embarquée par transformation en ondelettes.

D'autres avantages et caractéristiques de l'invention apparaîtront de façon plus claire dans la description qui va être faite en relation avec les figures jointes.

La figure 1, déjà commentée, représente le schéma général d'une chaîne de traitement de données pour la compression d'image par transformation en ondelettes.

La figure 2, également déjà commentée, illustre schématiquement le principe d'analyse multi-résolution qui est réalisé par une transformation en ondelettes.

La figure 3 schématise la structure hiérarchique des coefficients résultant d'une transformée en ondelettes.

La figure 4 représente un ordre préférentiel pour le codage des symboles.

Le procédé selon l'invention se base sur le schéma général illustré par la figure 1 et précédemment commenté.

### Transformation en ondelettes

L'étape référencée C₁ sur la figure 1 consiste à appliquer un procédé de transformation en ondelettes tel celui décrit dans l'article de Christos Chrysafis et Antonio Ortega précédemment cité, sur l'ensemble des points à traiter.

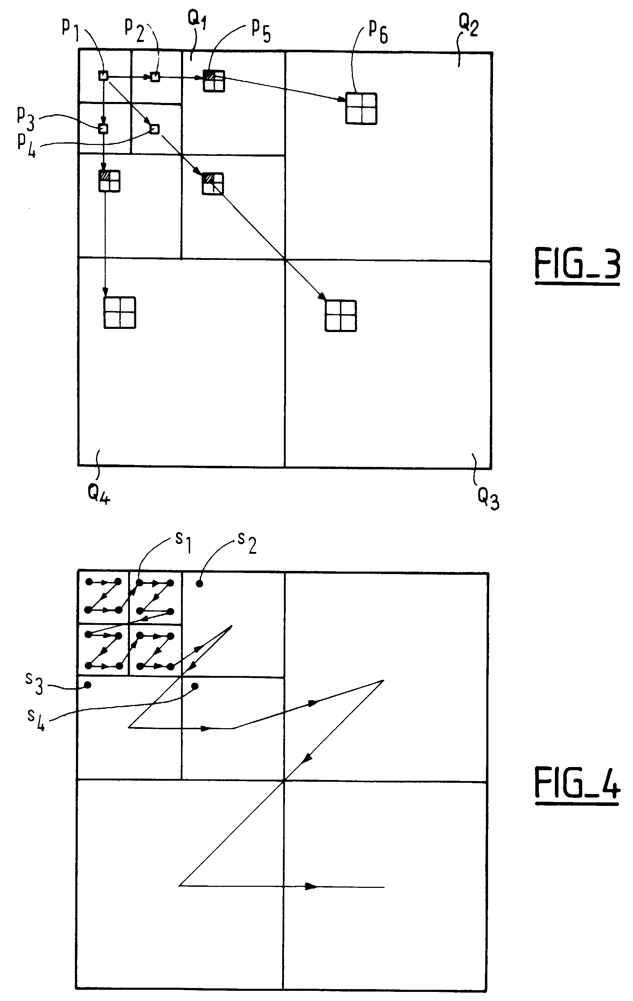

On sait que le principe de la transformation en ondelettes engendre une structuration hiérarchique des coefficients transformés. Cette structure est illustrée par la figure 3.

Pour une description très complète de la transformée en ondelettes, et de la structure des coefficients résultants, on peut se référer à l'article intitulée « *Embedded Image Coding Using Zerotrees of Wavelet Coefficients* » de Jérôme Shapiro. Cet article explique que, excepté dans le quadrant correspondant à l'image des tendances du dernier niveau de résolution, et dans les quadrants correspondants aux images des variations du premier niveau de résolution, pour chaque coefficient, on peut définir une relation hiérarchique avec les quatre coefficients situés dans le quadrant correspondant à la même direction (horizontale, diagonale ou verticale) et même position spatiale, et de niveau de résolution immédiatement inférieur. Ces 4 correspondants sont appelés enfants du premier coefficient, qui, est réciproquement appelé parent de ses 4 fils.

Pour un coefficient du quadrant correspondant à l'image des tendances de niveau de résolution le plus élevé, les enfants sont les 3 coefficients situés à la même position spatiale et dans les 3 autres quadrants du même niveau de résolution.

A titre d'exemple, sur la figure 3, le coefficient p₁ appartient au quadrant correspondant à l'image des tendances de niveau de résolution le plus élevé (c'est-à-dire en haut à gauche), et a donc 3 enfants : p₂, p₃, p₄.

Par contre, le coefficient p₂ qui appartient à un quadrant correspondant à une image des variations de niveau de résolution qui n'est pas le plus faible, a 4 enfants, formant un groupe, référencé p₅. De même, le coefficient grisé appartenant à ce groupe p₅ a lui-même 4 enfants formant un groupe p₆. Les coefficients appartenant aux groupes p₅ et p₆ sont appelés descendants du coefficient p₂.

### Principe général de la quantification par approximations successives

L'étape référencée C₂ sur la figure 1 consiste à quantifier les coefficients calculés par la transformée en ondelettes. Plus précisément, elle consiste à calculer pour chaque coefficient issu de la transformée en ondelettes, un ensemble de k symboles, où k est le nombre de bits avec lequel sont codés les coefficients.

Cette quantification est effectuée par plans de bit, c'est-à-dire que l'on traite tout d'abord le bit de poids fort des coefficients, puis le bit de poids immédiatement inférieur et ainsi de suite. Autrement dit, la première passe (dite passe dominante) consiste à déterminer une première approximation grossière, et chacune des passes suivantes (dites passes subordonnées), en s'intéressant à des bits de poids de plus en plus faible, raffinera cette approximation.

Lors de la passe dominante, lorsque pour un plan de bits donné (i.e. pour un poids particulier), le bit correspondant à un coefficient est nul, il est appelé non significatif et est codé par un symbole Z pour zéro (ou encore « 0 »).

Lorsque l'on rencontre le premier bit significatif d'un coefficient, il faut coder son signe. On utilise pour cela deux symboles : POS (pour positif) et NEG (pour négatif), ou encore « 1 » et « -1 » respectivement.

Dans le cas où l'on a déjà rencontré un bit significatif pour ce coefficient (i.e. où l'on est dans une passe subordonnée) et où donc le signe a déjà été codé, les bits suivants sont codés simplement en utilisant deux symboles, un pour chaque valeur binaire 1 et 0.

Un exemple particulier d'un tel procédé de quantification par approximations successives est décrit dans l'article « Embedded image *coding using zerotrees of wavelet coefficients* » de Jérôme M. Shapiro, IEEE *Transaction on Signal Processing,* vol. 41, n°12, décembre 1993.

### Adaptation de la quantification par approximation successive à la transformée en ondelettes « au fil de l'eau »

Cependant, le procédé de transformation en ondelettes au fil de l'eau, de par l'utilisation de plusieurs mémoires tampons glissantes, génère un flot de coefficients désordonné.

Afin de pouvoir transmettre en sortie de cette étape de quantification, un flot ordonné de symboles, il faut tenir compte de l'ordre partiel qui existe dans le flot de coefficients issu de la transformée en ondelettes au fil de l'eau.

Il est en effet possible de diviser l'ensemble des coefficients en bandes de données qui contiennent tous les fils des coefficients qu'elles contiennent. Autrement dit, deux coefficients pris dans une même bande peuvent être désordonnés, c'est-à-dire qu'une permutation est nécessaire. Par contre, deux coefficients pris dans deux bandes différentes sont forcément ordonnés entre eux. La conséquence de cette constatation est qu'il n'est besoin d'effectuer un ordonnancement qu'à l'intérieur des bandes, de façon indépendante les unes des autres.

La taille des bandes dépend uniquement du nombre de niveaux de résolution de la transformée en ondelettes. Si N est ce nombre de niveaux de résolution, les bandes posséderont 2^{N} lignes de coefficients. Typiquement, donc, pour un nombre de niveaux de résolution de 3, les bandes posséderont 8 lignes.

Selon une première mise en oeuvre, l'ordonnancement peut être réalisé par une étape indépendante et postérieure au calcul des symboles. Les symboles sont placés les uns à la suite des autres au fur et à mesure de leur calcul, puis re-ordonnancés par permutations des symboles au sein d'une mémoire tampon.

Selon une seconde mise en oeuvre, préférentielle, l'ordonnancement peut être réalisé simultanément à l'étape de calcul des symboles. Chaque symbole nouvellement calculé est placé à sa place correcte à l'intérieur de la mémoire tampon.

Dans les deux cas, le résultat est le même et l'on obtient en sortie de cette étape un ensemble de bandes de données, dans lesquelles les symboles sont ordonnés conformément à la structure arborescente propre à la transformée en ondelettes.

### Mise en oeuvre d'un procédé d'élagage de type zerotree

II est possible d'insérer à la suite de cette étape, une étape d'élagage d'arbres non significatifs. Ce concept, communément appelé zerotree, a été présenté dans l'article susmentionné de Jérôme M. Shapiro intitulé « *Embedded image coding using zerotrees of wavelet coefficients* ».

En effet, en raison des propriétés de la transformée en ondelettes, on sait que lorsqu'un bit d'un coefficient n'est pas significatif, les bits de même poids des coefficients descendants ont de bonnes probabilités de ne pas être significatif non plus. On sait en effet que chaque fois que l'on descend d'un niveau de résolution, la magnitude moyenne des coefficients est divisée par deux.

Aussi, il peut être intéressant de mettre en oeuvre un symbole d'échappement, appelé zerotree, dont le rôle est d'indiquer que le bit de même poids de tous les symboles descendant est non significatif et donc non codé.

L'intérêt est donc de réduire la quantité d'information à coder. On peut ainsi obtenir de meilleurs taux de compression.

### Codage des symboles

L'étape suivante, référencée C₃ sur la figure 1, est une étape de codage des symboles, par exemple de codage arithmétique.

Le codage arithmétique est décrit dans de nombreux ouvrages. On peut par exemple citer l'article « *Arithmetic coding for data* compression » de lan H. Witten, Radford M. Neal et John G. Cleary, paru dans *Communication of the ACM,* Juin 1987, volume 30, numéro 6.

Afin d'améliorer notablement la pertinence du codage, il est utile de prendre en compte le contexte du symbole à coder, c'est-à-dire une partie de son voisinage qui permet, grâce à son contenu sémantique, de prédire dans une certaine mesure, ce symbole à coder. Il faut, pour ce faire, prendre en compte la structure arborescente des symboles.

La figure 4 illustre un ordre de parcours préférentiel, en zigzag, de l'ensemble des symboles. Cet ordre de parcours en zigzag est décrit dans la majorité des documents de l'état de l'art en la matière, et notamment dans ceux déjà cités. Il consiste à :
- Parcourir les coefficients parents avant les coefficients enfants,
- Parcourir un quadrant en totalité avant de passer à un autre quadrant.

Cet ordre de parcours possède au moins deux avantages :
- Il permet de coder en premier lieu les informations les plus pertinentes, c'est-à-dire les symboles qui correspondent aux fréquences les plus basses.
- Pour chaque symbole traité, il permet d'avoir à disposition un contexte intéressant pour notamment mettre en oeuvre des techniques classiques de codage prédictif.

Par exemple, en référence avec la figure 4, en connaissant la valeur des symboles s₁, s₂ et s₃, il est possible d'obtenir une bonne prédiction pour le symbole s₄. Par conséquent, on peut coder le symbole s₄ sur moins de bits d'information qu'il aurait été nécessaire sans ce mécanisme de prédiction.

## Revendications

1. Procédé automatique de compression d'images numériques pour système embarqué, comportant les étapes ordonnées suivantes :
• transformée en ondelettes au fil de l'eau d'un ensemble de points de l'image numérique à traiter fournissant un ensemble de coefficients groupés par bandes,
• calcul d'un ensemble de symboles à partir desdits coefficients,
• ordonnancement dudit ensemble de symboles
• codage desdits symboles en fonction d'un contexte contenu dans lesdites bandes.

2. Procédé selon la revendication précédente, caractérisé en ce que les étapes de calcul et d'ordonnancement sont effectuées simultanément.

3. Procédé selon l'une des revendications précédentes, caractérisé en ce que ladite étape de codage est précédée d'une étape de distinction entre les zéros isolés et les zéros de type *zerotree*.

4. Dispositif pour la compression d'images numériques dans un système embarqué, comportant :
• un moyen pour effectuer une transformée en ondelettes au fil de l'eau d'un ensemble de points de l'image numérique à traiter fournissant un ensemble de coefficients groupés par bandes,
• un moyen de calcul d'un ensemble de symboles à partir desdits coefficients,
• un moyen d'ordonnancement dudit ensemble de symboles,
• un moyen de codage desdits symboles en fonction d'un contexte contenu dans lesdites bandes.

5. Dispositif selon la revendication précédente, caractérisé en ce que les moyens de calcul et d'ordonnancement sont confondus.

6. Dispositif selon l'une des revendications précédentes, caractérisé en ce qu'il possède en outre un moyen de distinction entre les zéros isolés et les zéros de type *zerotree*, qui est mis en oeuvre avant le codage desdits symboles.
